# EUROPÄISCHE PATENTSCHRIFT

(11) **EP 0 446 421 B1**
(45) Veröffentlichungstag und Bekanntmachung des Hinweises auf die Patenterteilung: **30.06.1993**
(21) Anmeldenummer: 90121062.5
(22) Anmeldetag: 02.11.1990
(51) Int. Cl.: B60T 8/18, B66F 9/075, B62B 5/04, F16D 59/02, F16D 49/16

(54) **Fahrzeugbremse für Hublader**
Vehicle brake for a lifting lorry
Frein de véhicule pour chariot élévateur

(30) Priorität: 15.03.1990 DE 4008277
(43) Veröffentlichungstag der Anmeldung: 18.09.1991
(73) Patentinhaber: Jungheinrich Aktiengesellschaft, 22047 Hamburg (DE)
(72) Erfinder: John, Uwe, Dipl.-Ing., W-2061 Nahe (DE); Schalmath, Heinz, Ing. grad., W-2359 Stuvenborn (DE)
(74) Vertreter: Patentanwälte Hauck, Graalfs, Wehnert, Döring, Siemons

(56) Entgegenhaltungen:
- DE-A- 3 833 571
- FR-A- 390 297
- GB-A- 433 504
- US-A- 3 080 019
- US-A- 3 896 925

## Beschreibung

Die Erfindung betrifft eine Fahrzeugbremse für Hublader mit wenigstens einem druckmittelbetriebenen Hubzylinder, welche Bremse mechanisch vermittels einer Feder an eine Bremsscheibe anpreßbare Bremsbacken aufweist, welche durch Spreizung entgegen der Feder gelüftet werden können, wobei eine Lastabhängigkeit der Bremsung vom Druckmitteldruck im Hubzylinder bewirkt wird (z.B. US-A-3 080 019).

In einer vorgeschlagenen Ausführung nach Patentanmeldung P 38 33 571.9-21 (veröffentlicht am 05.04.90) wird durch die Einführung des Druckes aus dem Hubzylinder ein Federwiderlager verstellt, so daß damit zugleich der Federweg geändert wird. Dabei ist die zur Verstellung des Federwiderlagers vorgesehene Bremsensteueranordnung an den Enden der Bremsbacken an Bremsbackenansätzen angeordnet, an denen auch die Feder vorgesehen ist. Ein Strömungsmitteldruck wirkt in Abhängigkeit von der Belastung des Hubzylinders indirekt, weil nicht unmittelbar die Bremskraft verstärkt, sondern indirekt eine erhöhte Bremskraft dadurch herbeigeführt wird, daß das von den Bremsbackenansätzen nach außen abgesetzte Federwiderlager verstellt wird. Diese Verstellung beschränkt den wirksamen Federweg. Dadurch wird die Funktion der Feder eingeschränkt.

Bei der vorgeschlagenen Ausführung ist die Feder bei erhöhter Last vorgespannt. Insofern ist bei der vorgeschlagenen Ausführung von vornherein ein Teil der Federkraft verbraucht und im Betrieb ein Teil eines Nachstellweges ausgeschlossen. Das wirkt sich auch auf den Arbeitszustand aus, in welchem ein Verschleiß der Bremsbeläge schon einen Teil der Federkraft verbraucht.

Der Erfindung liegt die Aufgabe zugrunde, eine Fahrzeugbremse gemäß einleitenden Bemerkungen in Verbindung mit wenigstens einem druckmittelbetriebenen Hubzylinder zu schaffen, bei welcher eine lastabhängige Bremskraftverstärkung ohne Beeinflussung des Federweges erreicht wird, so daß die Anpassungsmöglichkeiten der Bremse verbessert werden.

Diese Aufgabe wird erfindungsgemäß dadurch gelöst, daß in einer Ausführung, in welcher die Feder zwischen Ansätzen an den schwenkbar gelagerten Bremsbacken angeordnet ist, an der von der Anordnung eines Bremslüfters abgekehrten Seite der Bremsbacken, an welcher Schwenkzapfen für die Bremsbacken angeordnet sind, Verlängerungsansätze der Bremsbacken vorgesehen sind und zwischen diesen Verlängerungsansätzen ein ausfahrbarer Druckmittelzylinder angeordnet ist, welcher mit dem Druckraum des Hubzylinders beidseitig verbunden ist. Der Druckmittelzylinder kann einerseits mit einem Ansatz im Zylinderboden und andererseits über eine ausfahrbare Kolbenstange abgestützt sein. Bevorzugt wird jedoch ein Druckmittelzylinder, der beiderseits ausfahrbare Kolbenstangen aufweist.

Die Spannung der Feder wird ohne Einschränkung ihres Weges im Sinne einer Bremsenanlegung unterstützt. Durch die Wahl einer Feder kann dabei ein erheblicher Spielraum auch für die Feinfühligkeit einer Bremsenanlegung geschaffen werden, wobei aber durch die Erfindung dann zugleich mit Sicherheit gewährleistet ist, daß eine notwendige Bremsenanlegung auch mit Sicherheit und immer großer Anpassungsfähigkeit erfolgt. Die angegebene Lösung ist nicht nur baulich relativ einfach, sondern hat den Vorteil, daß durch die Bemessung der Verlängerungsansätze bzw. der Eingriffslager der Kolbenstangen der im Druckmittelzylinder angeordneten Kolben auch das Maß der Kraftverstärkung bei der Bremsenanlegung gewählt werden kann. Hierbei ist bei paralleler Anordnung eines Druckmittelzylinders und einer Feder eine Bremskraftverstärkung im gleichen Sinne wie der durch die Feder aufgebrachte Anlegungsdruck vorgesehen. In der bevorzugten Ausführungsform der Erfindung ist die Druckfeder neben dem Druckmittelzylinder angeordnet. Dieses erbringt eine kompakte Baugruppe in der bevorzugten Parallelanordnung von Feder und bremskraftverstärkendem Druckmittelzylinder. Die parallele Anordnung eines Druckzylinders zur Feder stellt daher eine zusätzliche Anpreßkraft dar, welche an sich die Feder in ihrer Anordnung nicht beeinträchtigt.

Gemäß einer anderen vorteilhaften Ausführung ist eine Feder an einem Verbindungsstift zwischen Ansätzen an den Bremsbacken, zwischen denen auch der Bremslüfter wirkbar ist, angeordnet wobei der Verbindungsstift die Ansätze durchsetzt und außerhalb der Ansätze Widerlager aufweist, von denen eines ein Federwiderlager ist, an dem die Feder abgestützt ist. Dabei ist die Federanordnung zweckmäßig an einer Seite der Bremsbacken vorgesehen, und zwar an Ansätzen, welche sich bei Entlastung der Bremse spreizen.

Eine solche Ausführung ist bereits vorgeschlagen. In dieser Ausführung liegt aber ein zweckmäßiges Merkmal, wenn Federanordnung und der als Bremskraftverstärker vorgesehene Druckmittelzylinder an verschiedenen Seiten der Bremsbacken angeordnet sein sollen. Dieses kann aus baulichen Gründen zweckmäßig sein. Grundsätzlich liegt eine vorteilhafte Ausgestaltung darin, daß die zunächst zusammengedrückte und zwecks Fahrfreigabe sich im zusammengedrückten Zustand befindliche Feder nach Freigabe der Bremsbackenanordnung auch bei zusätzlicher lastabhängiger Bremskraftverstärkung mittels eines Druckmittelzylinders in voller Ausdehnung ihres Federweges vorgesehen ist. Die Aufrechterhaltung des vollen Federweges hat für die Anpassungsfähigkeit damit für gleichbleibende Betriebsbedingungen besonders günstige Einflüsse. Es entfällt dabei auch die in der vorgeschlagenen Ausführung unter Umständen vorhandene Notwendigkeit, eine verstärkte Feder einzusetzen, die die Gefahr einer Schwingungsabhängigkeit mit sich bringt. Durch die Parallelanordnung findet dabei keine unmittelbare Beeinflussung ggf. auch von Stößen der Lastaufnahme in der Form statt, wie sie bei der Hintereinanderanordnung der Feder und des Druckmittelzylinders auftreten können. Wenn bei der erfindungsgemäßen Ausführung bei Bremsbelagverschleiß eine entsprechend bemessene Entspannung der eingesetzten Feder erfolgt, wird dieses aufgrund der Belastung des Hubzylinders so weit übersteuert, daß aufgrund der von der Feder unabhängigen Auswirkung dieses Druckes die Bremskraft erhöht wird, ohne daß dabei eine stärkere Federvorspannung notwendig ist.

Die Erfindung wird im folgenden anhand von vorteilhaften Ausführungsbeispielen beschrieben, die in der Zeichnung dargestellt sind. In der Zeichnung zeigen:
- Fig. 1: ein schematisches Schaubild für eine Last hubeinrichtung eines Hubfahrzeuges in Verbindung mit einer Bremse;
- Fig. 2: eine der Fig. 1 entsprechende Darstellung, jedoch in einer anderen Ausführungsform.

In den Figuren sind nur die für die Erfindung wesentlichen Teile gezeigt.

In der Patentanmeldung P 38 33 571.9-21 ist dargelegt, wie die im folgenden anhand von Zeichnungen eingeführten Teile zu einem Hubfahrzeug gehören. Ein solches Hubfahrzeug hat ein Fahrgestell, an welchem ein Hubmast angeordnet ist. An diesem Hubmast ist ein Lastträgerschlitten 39 höhenbeweglich geführt. An diesem Schlitten 39 sind Gabelarme 40 angeordnet. Ferner sind am Fahrgestell Fahrstreben mit Lastrollen vorgesehen, und zwar unter Gabelarmen. Diese sind in ihrer untersten Stellung mit einem nach unten offenen U-förmigen Profil auf die Fahrstreben aufsetzbar.

Am Fahrgestell eines solchen Hubfahrzeuges ist in der Mitte ein lenkbares Antriebsrad zwischen Stütz-Nachlaufrollen angeordnet. Ein Antriebsaggregat für das Antriebsrad ist vermittels einer Abstützung im Fahrgestell drehbar gelagert und steht über ein Gestänge mit einer Deichsel in Verbindung, welche einen Handgriff zugleich als Steuerkopf aufweist.

An dem Antriebsrad befindet sich eine Bremsscheibe 6. Die Bremsscheibe 6 kann auch eine Bremstrommel sein. Auf ihr sind zwei Bremsbacken 2, 3 mit Bremsbelägen 4, 5 angeordnet, welche an einem Ende um Zapfen 7, 8, die im Fahrgestell bzw. am Antriebsaggregat angeordnet sind, verschwenkbar gelagert sind.

Nunmehr wird, abgesehen von obigen Hinweisen, durch Bezugszeichen auf die beigefügten Zeichnungen bezug genommen. Die Bremsscheibe 6 ggf. eine Bremstrommel, kann in einfacher Ausführung bei einem Dreiradfahrzeug vorgesehen sein. Bei einem Vierradfahrzeug oder einer Anordnung an zwei gleichachsigen Rädern sind zwei solcher Anordnungen angebracht.

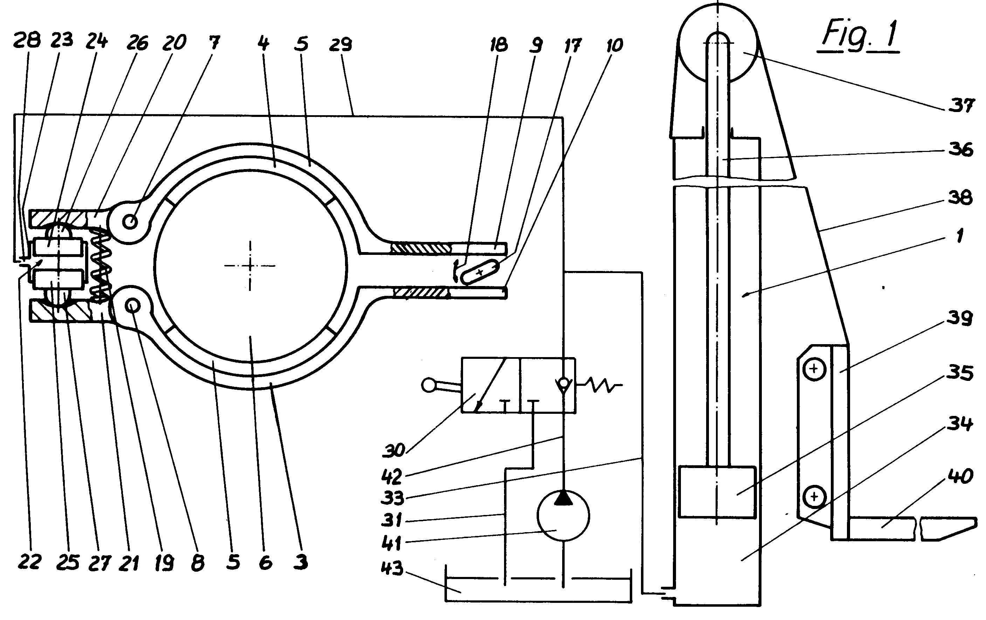

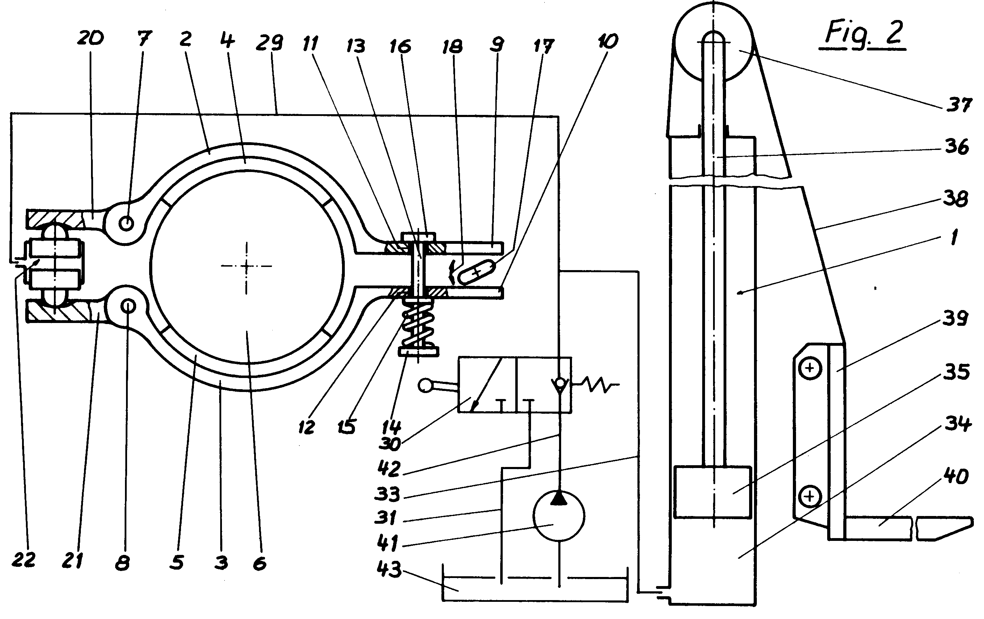

Bereits erwähnt ist, daß die Bremsbacken 2, 3 um Zapfen 7, 8 verschwenkbar gelagert sind. Dabei ist davon auszugehen, daß gemäß Fig. 1 und 2 die Bremsbacken 2, 3 an den von den um Zapfen 7, 8 verschwenkbar gelagerten Enden abgekehrten Enden die abstehenden Ansätze 9, 10 aufweisen.

Nach Figur 1 kann einer Zusammendrückung der Bremsbacken durch einen Bremslüfter, insbesondere einen Einstellnocken 17 entgegengewirkt werden, welcher zwischen den Ansätzen 9, 10 der Bremsbacken 2, 3 angeordnet ist und in Richtung des eingezeichneten Doppelpfeiles 18 verstellbar ist. Wenn dieser Einstellnocken 17 bezüglich Fig. 1 entgegen dem Uhrzeigersinn verstellt wird, werden die Bremsbeläge 4, 5 abgehoben, und zwar bezüglich Fig. 1 gegen die Wirkung einer Andruckfeder 19. In der bevorzugten Ausführungsform nach Fig. 1 sind Verlängerungsansätze 20, 21 an der Seite der Bremsbacken 2, 3, welche bezüglich der Zapfen 7, 8 von der Seite abgekehrt ist, an der die Ansätze 9, 10 mit dem Nocken 17 vorgesehen sind. Zwischen diesen Verlängerungsansätzen 20, 21 befindet sich die Andruckfeder 19. Wenn sich infolgedessen die Feder 19 ausdehnt und die Ansätze 9, 10 freigegeben sind, werden die Bremsbacken angelegt. Dieses wird unterstützt durch eine Zylinderkolbenanordnung 22 mit einem Zylinder 23, in dessen Ende zwei jeweils gegensinnig ausfahrbare Kolben 24, 25 mit Kolbenstangen 26, 27 angeordnet sind, die in Auskehlungen der Verlängerungsansätze 20, 21 eingreifen.

Der Zylinder 23 steht über einen Anschluß 28 und eine Leitung 29 mit einem an sich bekannten hydraulischen Steuergerät 30 in Verbindung. Dieses ist in einen Leitungsabschnitt 42 mit einer Pumpe 41 eingeschaltet, die mit einem Tank 43 in Verbindung steht. Zugleich ist das Steuergerät 30 auch mit einem Rücklaufanschluß 31 zum Tank verbunden.

In die Leitung 29 mündet eine abgezweigte Verbindungsleitung 33, die mit einem lastabhängig beaufschlagten Druckraum 34 eines Hubzylinders 1 in Verbindung steht. Es ist ersichtlich, daß ein Kolben 35 dieser Hubzylinderkolbeneinrichtung mit einer nach oben herausgeführten Kolbenstange 36 in Verbindung steht, an welcher über eine Umlenkrolle 37 ein Seilzug oder eine Kette 38 geführt ist, die mit dem Lastträgerschlitten 39 in Verbindung steht, an welchem die Gabelarme 40 angeordnet sind, die als Lastträger zum Lastträgerschlitten an einem nicht dargestellten Hubgerüst gehören.

Die Fig. 1 zeigt, daß die Verbindung 33, 29 ständig offen ist. Die die Hubzylinderkolbeneinrichtung 1 speisende Pumpe 41 wirkt sowohl in die Leitung 29 als auch die Verbindungsleitung 33. Durch das Steuergerät 30 ist der Druckanschluß in der beschriebenen Weise oder ein Rücklaufanschluß in den Tank 43 herstellbar.

Aufgrund des Spreizungswinkels zwischen den beiden Verlängerungsansätzen 20, 21 wird die Bremsanlegung gesteuert, und zwar unmittelbar mit der Druckaufbringung durch die Pumpe 41, so daß eine direkte Verstärkung der Druckanlegung stattfindet.

Diese Wirkung kann durch Verstellung des Einstellnockens 17 verändert werden, was bei einem Fahrzeug beispielsweise durch eine Schwenkbewegung der Deichsel 44 oder in einer anderen Ausführungsform des Fahrzeuges durch ein Gestänge, das entweder von einem Fahrer bestätigt wird oder aber auch bei einem fahrerlosen Fahrzeug durch eine Befehlseingabe an der Fahrstrecke erfolgen kann.

Die Feder 19 kann in jeder Ausführung der Erfindung ihre volle Kraft zur Bremsausübung aufbringen. Lediglich durch Verstellung des Nockens 17 kann die Ausdehnung der Feder gehemmt werden, wobei dann zugleich auch die Ausdehnungsfähigkeit der Zylinderkolbenanordnung gehemmt wird.

Die Fig. 2 zeigt eine abweichende Ausführungsform, die aber in einer anderen Ausgestaltung entsprechende Wirkungen berücksichtigt. Nach Fig. 2 haben die bereits oben erwähnten Bremsbacken Ansätze 9, 10 mit Abstand von ihren Enden Öffnungen 11, 12, durch welche ein Verbindungsstift 13 mit Spiel geführt ist, so daß eine Änderung der Winkeleinstellung in beschränktem Maße leicht möglich ist.

Dieser Verbindungsstift hat an einem Ende mit Abstand von der Außenseite des Ansatzes 10 ein Federwiderlager 14. Unter diesem ist eine Feder 15 abgestützt, deren anderes Ende, ggf. über eine Unterlegscheibe, am Ansatz 10 abgestützt ist. Diese Feder, eine Druckfeder, bringt, wenn sie freigegeben ist, die Bremskraft auf, um die Bremsbacken 2, 3 zusammenzudrücken.

Das andere Ende des Verbindungsstiftes 13 hat einen Flasch 16, der auf der Außenseite des Ansatzes 9 aufliegt. Dadurch ist die Feder 15 bestrebt, die Ansätze 9, 10 aneinander zu drücken. Unter diesem Gesichtspunkt, der einbezogen wird, liegt die Zylinderkolbenanordnung 22, bezüglich der Bremsbacken an der anderen Seite der Bremsbacken als die Federanordnung. Wenn die Zylinderkolbenanordnung 22 zwischen den Verlängerungsansätzen 20, 21 eingesetzt ist, befindet sich die die Bremsenanlegung fördernde Feder 15 in Fig. 2 an einem mit dem Flasch 16 ausgestatteten Verbindungsstift 13 und wirkt von außen auf den Ansatz 10 ein. Auch hier wirkt die Zylinderkolbenanordnung 22 gleichsinnig mit der Feder 15 zur Bremsenanlegung, insbesondere Verstärkung des Bremsenanlegungsdruckes.

## Patentansprüche

1. Fahrzeugbremse für Hublader mit wenigstens einem druckmittelbetriebenen Hubzylinder, welche Bremse mechanisch vermittels einer Feder (15,19) an eine Bremsscheibe (6) anpreßbare Bremsbacken (2,3) aufweist, welche durch Spreizung entgegen der Feder gelüftet werden können, wobei die Lastabhängigkeit der Abstützung vom Druckmitteldruck im Hubzylinder bewirkt wird, dadurch gekennzeichnet, daß bei zunehmender Last eine Kraft aufbringbar ist, welche der Kraftwirkung der Feder gleichgerichtet ist, wobei mit zunehmender Kraft der Bereich der Federwirkung erhöht wird.

2. Fahrzeugbremse nach Anspruch 1, bei welcher die Feder (19) zwischen Ansätzen (20,21) an den schwenkbar gelagerten Bremsbacken (2,3) angeordnet ist, dadurch gekennzeichnet, daß an der von der Anordnung eines Bremslüfters abgekehrten Seite der Bremsbacken (2, 3), an welcher Schwenkzapfen (7, 8) für die Bremsbacken (2, 3) angeordnet sind, Verlängerungsansätze (20, 21) der Bremsbacken (2, 3) vorgesehen sind und zwischen diesen Verlängerungsansätzen (20, 21) ein ausfahrbarer Druckmittelzylinder (22) angeordnet ist, welcher mit dem Druckraum (34) des Hubzylinders (1) beidseitig verbunden ist.

3. Fahrzeugbremse nach Anspruch 2, dadurch gekennzeichnet, daß ein Druckmittelzylinder (22, 23) angeordnet ist, der beiderseits ausfahrbare Kolbenstangen (26, 27) aufweist.

4. Fahrzeugbremse nach Anspruch 3, dadurch gekennzeichnet, daß die Druckfeder (19) neben dem Druckmittelzylinder (22) angeordnet ist.

5. Fahrzeugbremse nach einem der Ansprüch 1 bis 3, dadurch gekennzeichnet, daß eine Feder (15) an einem Verbindungsstift (13) zwischen Ansätzen (9, 10) an den Bremsbacken (2, 3), zwischen denen auch der Bremslüfter (10) wirkbar ist, angeordnet ist, wobei der Verbindungsstift (13) die Ansätze (9, 10) durchsetzt und außerhalb der Ansätze (9, 10) Widerlager (14) aufweist, von denen eines ein Federwiderlager ist, an dem die Feder (15) abgestützt ist.

6. Fahrzeugbremse nach Anspruch 5, dadurch gekennzeichnet, daß die Federanordnung an einer Seite der Bremsbacken (2, 3) vorgesehen ist, und zwar an Ansätzen (9, 10), welche sich bei Entlastung der Bremse spreizen.

7. Fahrzeugbremse nach Anspruch 4, dadurch gekennzeichnet, daß bei paralleler Anordnung eines Druckmittelzylinders (22) und einer Feder (19) eine Bremskraftverstärkung im gleichen Sinne wie der durch die Feder aufgebrachte Anlegungsdruck vorgesehen ist.

8. Fahrzeugbremse nach einem der Ansprüche 2 bis 4, dadurch gekennzeichnet, daß bei der Schwenklagerung (7, 8) der Bremsbacken (2, 3) an einer Seite der Bremse, und zwar an der Seite, welche von den genannten Ansätzen (9, 10) abgekehrt ist, eine Verlängerung der Bremsbacken (2, 3) über die Schwenklagerung (7, 8) vermittels Verlängerungsansätzen (20, 21) vorgesehen ist, zwischen denen wenigstens der Druckmittelzylinder angeordnet ist.

9. Fahrzeugbremse nach einem der Ansprüche 1 bis 8, dadurch gekennzeichnet, daß die zunächst zusammengedrückte und zwecks Fahrfreigabe sich im zusammengedrückten Zustand befindliche Feder (19) nach Freigabe der Bremsbackenanordnung auch bei zusätzlicher lastabhängiger Bremskraftverstärkung mittels eines Druckmittelzylinders (22) in voller Ausdehnung ihres Federweges vorgesehen ist.

## Claims

1. A vehicle brake for lifting lorries with at least a fluid operated lifting cylinder, which brake comprises brake shoes (2,3) to be mechanically urged towards a brake disk (6) by means of a spring (15,19), which brake shoes can be released by being expanded against the force of a spring, wherein the braking force is load responsive as a function of the fluid pressure in said lifting cylinder, characterized in that a force is applied with increasing load, which force acts in the same sense as the spring force, wherein the range of the spring action is increased as the force increases.

2. The vehicle brake of claim 1, in which the spring (19) is arranged between extensions (20,21) of the pivotally mounted brake shoes (2,3),
characterized in that extensions (20,21) of the brake shoes (2,3) are provided on the side of the brake shoes (2,3) opposite the brake releasing means which brake shoes are mounted to pivot about pins (7,8), and that between said extensions (20,21) an extendable fluid operated cylinder (22) is provided which is connected at both sides to the pressure chamber (34) of the lifting cylinder (1).

3. The vehicle brake of claim 1, wherein a fluid operated cylinder (22,23) is provided comprising a pair of extendable piston rods (26,27).

4. The vehicle brake of claim 3, wherein the compression spring (19) is located adjacent the fluid operated cylinder (22).

5. The vehicle brake of one of claims 1 to 3, characterized in that a spring (15) is provided on a connecting bolt (13) between extensions (9,10) of the brake shoes (2,3) between which extensions a brake releasing means (10) is operative, wherein the connecting bolt (13) extends through said extensions (9,10) and includes a supporting member (14) outside of the extensions (9,10) of which one extension defines a spring abutment for supporting said spring (15).

6. The vehicle brake of claim 5, wherein the spring means is provided at one side of the brake shoes on extensions (9,10) expanding when the brake is released.

7. The vehicle brake of claim 4, wherein the fluid operated cylinder (22) and a spring (19) are arranged in parallel to provide a brake force increase in the same sense as the pressure provided by the spring.

8. The vehicle brake of one of claims 2 to 4, wherein extensions (20,21) of the brake shoes (2,3) are provided at the side of the pivoting support (7,8) opposite the side accomodating said extensions (9,10) and wherein at least a fluid operated cylinder is provided between the extensions (20,21).

9. The vehicle brake of one of claims 1 to 8, wherein the initially compressed spring (19) being in compressed condition for the purpose of setting free the vehicle is mounted to be fully expanded after releasing the brake, while an increase of additional load responsive brake force is provided.

## Revendications

1. Frein de véhicule pour chariot élévateur comportant au moins un vérin de levage actionné par un fluide sous pression, frein qui présente des mâchoires de frein (2, 3) pouvant exercer mécaniquement une pression sur un disque de frein (6) au moyen d'un ressort (15, 19), les mâchoires de frein pouvant être desserrées par un effort d'écartement exercé en opposition au ressort, une relation entre cet effort et la charge étant réalisée en utilisant la pression de fluide dans le vérin de levage,
caractérisé en ce que,
lorsque la charge croît, une force de même direction que la force exercée par le ressort peut être appliquée, si bien que le domaine d'action du ressort augmente quand la force croissante appliquée s'accroît.

2. Frein de véhicule suivant la revendication 1, dans lequel le ressort (19) est disposé entre des prolongements (20, 21), sur les mâchoires de frein (2, 3) montées pivotantes, caractérisé en ce que, du côté des mâchoires de frein (2, 3) où sont disposés des axes de pivotement (7, 8) pour les mâchoires (2, 3) et qui est opposé au côté où est placé un écarteur de frein, des appendices (20, 21) sont prévus, qui prolongent les mâchoires de frein (2, 3), et en ce qu'entre ces appendices (20, 21), est disposé un vérin à fluide de pression (22), qui est relié, des deux côtés, avec la chambre de pression (34) du vérin de levage (1).

3. Frein de véhicule suivant la revendication 2, caractérisé en ce qu'il comporte un vérin à fluide de pression (22, 23) qui présente des tiges de piston (26, 27) pouvant sortir des deux côtés.

4. Frein de véhicule suivant la revendication 3, caractérisé en ce que le ressort de pression (19) est disposé à côté du vérin à fluide de pression (22).

5. Frein de véhicule suivant l'une quelconque des revendications 1 à 3, caractérisé en ce qu'un ressort (15) est disposé sur une tige de liaison (13) entre des prolongements (9, 10) sur les mâchoires de frein (2, 3), prolongements entre lesquels peut également agir l'écarteur de frein (10), étant entendu que la tige de liaison (13) traverse les prolongements (9, 10) et présente, en dehors des prolongements (9, 10), des contre-appui (14), dont l'un est un contre-appui de ressort, sur lequel s'appuie le ressort (15).

6. Frein de véhicule suivant la revendication 5, caractérisé en ce que l'ensemble à ressort est prévu sur un côté des mâchoires de frein (2, 3), et cela sur des prolongements (9, 10) qui s'écartent quand le frein est déchargé.

7. Frein de véhicule suivant la revendication 4, caractérisé en ce que, dans le cas d'une disposition parallèle du vérin à fluide de pression (22) et du ressort (19), on prévoit que de la force de freinage est renforcée dans le même sens que la pression d'application exercée par le ressort.

8. Frein de véhicule suivant l'une quelconque des revendications 2 à 4, caractérisé en ce que, dans le cas du montage pivotant (7, 8) des mâchoires de frein (2, 3) sur un côté du frein, opposé aux prolongements (9, 10) déjà cités, il est prévu un prolongement des mâchoires de frein (2, 3), au-delà du montage pivotant (7, 8), au moyen d'appendices de prolongation (20, 21), entre lesquels est disposé au moins le vérin à fluide de pression.

9. Frein de véhicule suivant l'une quelconque des revendications 1 à 8, caractérisé en ce que le ressort (19), comprimé au préalable, et qui se trouve en situation comprimée pour permettre le déplacement du chariot, est prévu avec sa course en extension complète après libération de l'ensemble des mâchoires de frein, même dans le cas d'un renforcement supplémentaire de la force de freinage en fonction de la charge, exercée au moyen d'un vérin à fluide de pression (22).
